# EUROPEAN PATENT SPECIFICATION

(11) **EP 2 024 652 B1**
(45) Date of publication and mention of the grant of the patent: **15.02.2012**
(21) Application number: 07722630.6
(22) Date of filing: 30.05.2007
(51) Int. Cl.: F16B 21/12, F16B 5/00

(54) **RAPID JOINING OF PERFORATED BANDS AND PERFORATED BAND FITTINGS**
SCHNELLES VERBINDEN PERFORIERTER BÄNDER UND PERFORIERTE BANDVERBINDUNGSSTÜCKE
ASSEMBLAGE RAPIDE DE BANDES PERFOREES ET RACCORDS DE BANDES PERFOREES

(30) Priority: 30.05.2006 DK 200600735
(43) Date of publication of application: 18.02.2009
(73) Proprietor: Lundvig, Morten, 7130 Juelsminde (DK)
(72) Inventor: Lundvig, Morten, 7130 Juelsminde (DK)
(74) Representative: Nielsen, Leif
(86) International application number: PCT/DK2007/000253
(87) International publication number: WO 2007/137583

(56) References cited:
- US-A- 3 683 737
- US-A- 5 152 652
- US-B1- 6 634 843

## Description

### Field of the Invention

The present invention concerns a system and a method for rapid and simple joining of perforated bands and perforated band fittings, including a fitting and at least one locking mechanism.

### Background of the Invention

Systems for simple joining of perforated bands and perforated band fittings are i.a. used for reinforcing roof, ceiling and wall constructions. The joining of wind tension bands (vindtrækbånd) to a perforated band fitting is necessary in order to tighten the fitted wind tension bands. Traditionally, wind tension bands and perforated band fittings are joined by means of five bolts and five nuts. This joining process is time-consuming, and in addition the presence of fixing tools is required.

US 3683737 concerns a two-partite connection for structural parts of same thickness and provided with apertures adapted to be aligned, which includes a plug-type member provided with a groove in its shank portion at a location of about twice the thickness of a structural part; a locking member consisting of a base body with an elongated channel of a size corresponding to the reduced shank portion, left by the groove, enables displacement in the direction of the channel while a spaced tongue-like projection connected to the base body elastically engages the end face of the shank portion to produce a frictional force opposing assembly and disassembly.

US 6634843 concerns a connector includes a head from which there extends a split shank. The split shank forms opposing first and second members having an offset or stepped inner surface. The free end of the shank includes a tapered flange provided with a retaining lip which extends beyond the outer surface of the shank. One or more openings may be provided through the shank for receiving a cotter pin.

US 5152652 concern a device for automatically spreading and locking cotter pins as they are driven into place. The device is an improvement on the cotter pin spreading devices disclosed in U.S. Pat. Nos. 1,751,013 dated Mar. 18, 1930 and 2,345,141 dated Mar. 28, 1944. The improved devices have locking extensions which, during the act of driving cotter pins into place, become deformed into locking engagement with the heads on the driven and spread cotter pins. Several forms of locking extensions are disclosed.

The above mentioned patent documents all concerns single bolts for connection of flat work pieces. The bolts all need locking devices for keeping the bolts in place.

### Object of the Invention

It is the object of the present invention to indicate a system and a method for rapid and simple joining of perforated bands and perforated band fittings. A second object is to join perforated bands or perforated band fittings with perforated bands rapidly and simply without using screws or tools. A third object is to prevent that a fitter forgets to mount one or more bolts.

### Description of the Invention

According to the present invention, this is achieved with a system and a method of the kind mentioned in the introduction, which is peculiar in that the fitting contains at least one bottom plate, which bottom plate of the fitting contains a number of pins which pins are disposed with the same spacing as the holes in the applied perforated band(s), or perforated band fitting(s), where the perforated band(s) or perforated band fitting(s) is/are disposed in layers on the bottom plate, where at least one hole in the perforated band(s) or perforated band fitting(s) interacts with the pin or pins of the bottom plate, where at least one locking element is placed over the perforated band(s) or perforated band fitting(s) in order to fix the perforated band(s) or perforated band fitting(s) in relation to the bottom plate.

By a system as well as a method according to the invention, there is thus achieved an advantage, as the system enables a very rapid and secure assembling of perforated bands and perforated band fittings. At the same time it is ensured that all clamping means are in their proper place.

By perforated band fittings is meant any kind of fittings in which perforated bands may be joined. It may e.g. be band connection fittings, coupling fittings or band clamps.

According to one embodiment, the present invention is peculiar in that the bottom plate of the fitting where one pin is longer than the other pins for forming a guide pin. Hereby is achieved the possibility of using the guide pin to "catch" the perforated bands and perforated band fittings to be fastened. It may be advantageous to use several pins for distributing the load arising in connection with the presence of tensile forces in the fastened perforated bands and perforated band fittings.

According to a further embodiment, the present invention is peculiar in that the fitting includes a bottom plate with pins and at least one side plate. This embodiment has a number of advantages. Firstly, the presence of one or more sides ensure lateral (direction perpendicular to the longitudinal direction of perforated bands and of pins) stability is ensured, whereby the load on the pins is reduced. Secondly, the side plate provides further possibility for inserting a locking element that prevents movement of perforated bands and perforated band fittings in longitudinal direction of the pins. Thirdly, the bottom plate will provide a plane and stable base for the securing of perforated bands and perforated band fittings.

According to a preferred embodiment, the present invention is peculiar in that the at least one locking mechanism includes at least one locking element for inserting through holes in the at least one side plate. Hereby is enabled the possibility of preventing movement of perforated bands and perforated band fittings in longitudinal direction of the pins. The locking element thus ensures the required stability and security for permanent joining of perforated bands and perforated band fittings. By using holes in the side plate for inserting locking elements, the loads from locking elements are transmitted to the side plate, which is therefore to be dimensioned with regard to providing the required mechanical strength.

According to yet an embodiment, the present invention is peculiar in that the at least one side plate contains holes with at least a first and a second distance from the bottom plate. By such a design, there is achieved possibility of using the same fitting for fastening various types of perforated bands and perforated band fittings. As holes with different distance from the bottom plate are used, it is possible to adjust the joining of items in relation to the total thickness of the items (measured in the longitudinal direction of the pins). Thus it is possible to join e.g. two perforated bands or a perforated band and a perforated band fitting by using holes that are disposed high and low, respectively, relative to the bottom plate.

In a preferred embodiment, the invention is designed with at least one top plate that contains holes interacting with pins which extends through underlying perforated bands, the top plate being designed longer than the perforated band fittings, where the top plate outside the perforated band fitting has at least one projection with a width which is larger than the width of the sides of the perforated band fitting.

A further securing of the underlying perforated band is effected by means of the top plate. When joining perforated bands, there will typically be two underlying layers, an upper and a lower perforated band, where there are pins which are through-going and which continue through associated holes in the top plate. Afterwards, the top plate will be locked by means of the previously mentioned locking means. As the top plate has a length which is greater than the perforated band fitting itself, and because the top plate is designed with projections protruding outside the sides of the perforated band fitting, while loaded by the perforated bands the top plate will, e.g. under strong pulling, support the pins so that these are not deflected, consequently releasing one of the perforated bands. As the top plate at the same time will relieve possible forces with the projections against the sides of the perforated band fitting, there may be obtained a very efficient supporting of the pins. In practice, there is attained so great tensile strength of a joining fitting that a perforated band during a tension test will not break in the perforated band fitting with great probability, but will break outside the joint.

According to a preferred embodiment, the present invention is peculiar in that after mounting in the fitting, the at least one locking element is retained via mechanical interaction with the fitting. The locking element hereby contributes with the required stability and security for permanent joining of perforated bands and perforated band fittings. By mechanical interaction is meant any kind of mechanical interaction providing the required stability and security of fastening. It may thus be a number of different kinds of mechanical interaction. It is possible to use a clamp which in connection with mounting is deformed compared with its natural shape, whereby a force arises (due to the resilient properties of the metal clamp) urging the clamp to return to its initial shape.

It is possible to make such a clamp of many materials. In connection with choice of material, the required strength properties must be taken into consideration. Galvanized steel may e.g. fulfil the requirements to great mechanical strength and at the same time it is treated with the object of resisting oxidation.

According to a preferred embodiment, the present invention is peculiar in that conical holes are punched in the bottom plate in which pins are inserted, each provided with a head, after which the areas of the bottom plate around the pins are pressed flat while simultaneously holding the pins fixed. Hereby is achieved a rapid and simple method for fastening pins to the fitting. By using this method of manufacture, it is avoided to weld the pins to the bottom plate. This is advantageous in several respects. Firstly, it is suitable for economic reasons. Secondly, one avoids the drawbacks associated with welding galvanised surfaces. Finally, the described method of manufacture will be a time-saving alternative to welding.

Despise this fact, welding may be an alternative which can be made cheaper by means of automatic welding equipment.

### Description of the Drawing

In the following, the invention will be explained in more detail with reference to the enclosed drawings, where:
Fig. 1 shows an embodiment of a system for joining two perforated bands;
Fig. 2 shows an embodiment of a system for joining a perforated band and a band clamping device;
Fig. 3 shows an embodiment of a system for joining a perforated band and a perforated band fitting;
Fig. 4 shows an embodiment of a system for making a fitting for joining several perforated bands, or perforated band(s) and perforated band fitting(s); and
Fig. 5 shows preferred embodiment with a top plate.

### Detailed Description of the Invention

In the following description, identical or corresponding elements in the various embodiments will be provided with the same designations below.

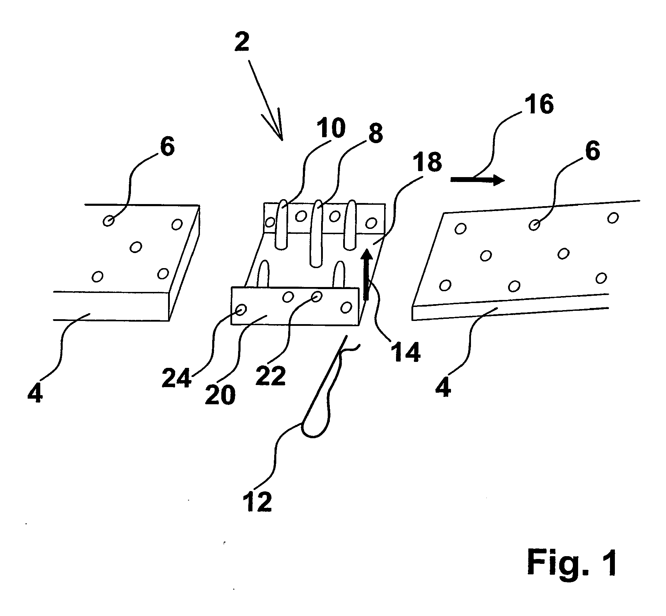

Fig. 1 shows a first embodiment of a system for joining two perforated bands (4). The system includes a fitting (2) consisting of a bottom plate (18) in which is fastened pins (10) and a long guide pin (8). The fitting (2) moreover includes two laterally disposed side plates (20), each provided with two lowly disposed holes (24) and two highly disposed holes (22). The two perforated bands (4) may be assembled and fastened in the fitting (2) by passing the perforated bands down over the pins (8 and 10), whereby the perforated bands (4) are secured against movement in longitudinal direction (16) of the perforated bands. Then the perforated bands (4) are locked in the fitting (2) by inserting one or more locking elements (12) through lowly disposed holes (24) or highly disposed holes (22) in the side plates (20), depending on the thickness of the perforated bands (measured in the longitudinal direction (14) of the pins). Hereby movement of the perforated bands (4) in longitudinal direction (14) of the pins is prevented.

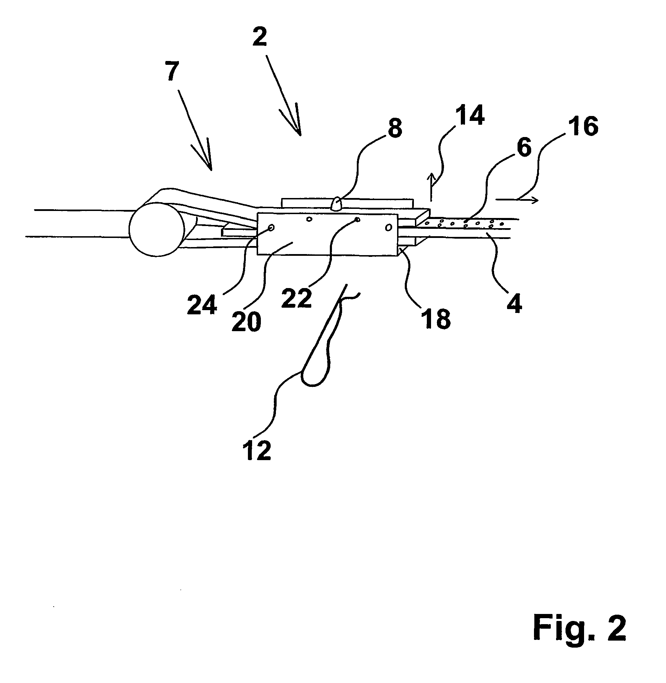

Fig. 2 shows a first embodiment of a system for joining a perforated band (4) and a band clamping device (7). The system includes a fitting (2) consisting of a bottom plate (18) in which is fastened pins (10) (not shown on Fig. 2) and a long guide pin (8). The fitting (2) moreover includes two laterally disposed side plates (20), each provided with two lowly disposed holes (24) and two highly disposed holes (22). The perforated band (4) and the band clamping device (7) may be assembled and fastened in the fitting (2) by passing the perforated band (4) and the band clamping device (7) down over the pins (8 and 10), whereby the perforated band (4) and the band clamping device (7) are secured against movement in longitudinal direction (16) of the perforated band. Then the perforated band (4) and the band clamping device (7) are locked in the fitting (2) by inserting one or more locking elements (12) through the lowly disposed holes (24) or the highly disposed holes (22) in the side plates (20), depending on the total thickness of the perforated band (4) and the band clamping device (7). Hereby movement of the perforated band (4) and the band clamping device (7) in longitudinal direction (14) of the pins is prevented.

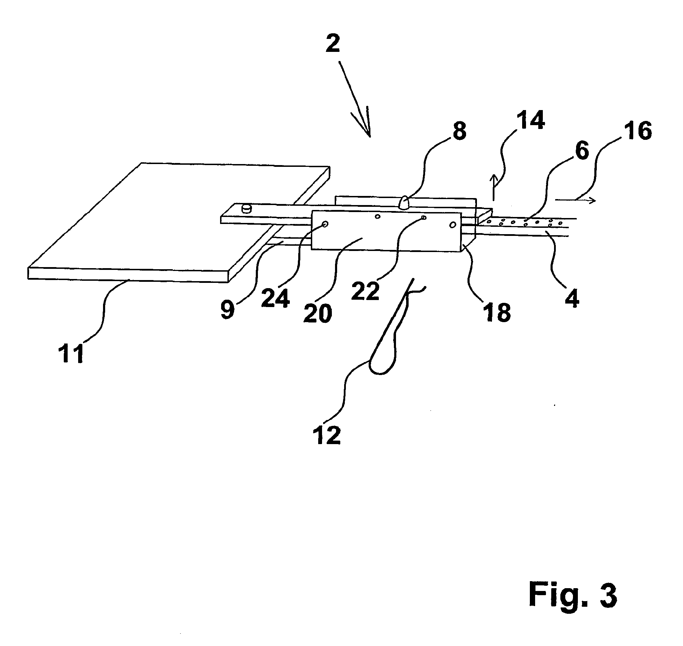

Fig. 3 shows a first embodiment of a system for joining a perforated band (4) and a band clamping device (9) which is fastened in a nailing plate (11). The system includes a fitting (2) consisting of a bottom plate (18) in which is fastened pins (10) (not visible on Fig. 2) and a long guide pin (8). The fitting (2) moreover includes two laterally disposed side plates (20), each provided with two lowly disposed holes (24) and two highly disposed holes (22). The perforated band (4) and the perforated band fitting (9) may be assembled and fastened in the fitting (2) by passing the perforated band (4) and the perforated band fitting (9) down over the pins (8 and 10), whereby the perforated band (4) and the perforated band fitting (9) are secured against movement in longitudinal direction (16) of the perforated band. Then the perforated band (4) and the perforated band fitting (9) are locked in the fitting (2) by inserting one or more locking elements (12) through the lowly disposed holes (24) or the highly disposed holes (22) in the side plates (20), depending on the total thickness of the perforated band (4) and perforated band fitting (9). Hereby movement of the perforated band (4) and the perforated band fitting (9) in longitudinal direction (14) of the pins is prevented.

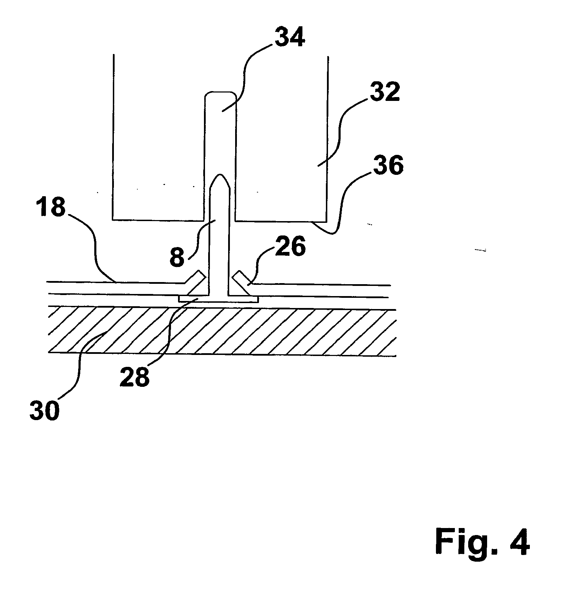

Fig. 4 shows a first embodiment of a system for making a fitting for joining of at least a first and a second perforated band or joining of perforated bands with perforated band fittings, where the fitting includes a bottom plate (18) containing at least one pin (8). The manufacturing method consists in punching holes in the bottom plate (18), whereby space appears for inserting pins (8) that each are provided with a flat head (28). Then a piston (32) is pressed down against the bottom plate (18) while the inserted pins (8) rest on a solid base (30). The cavity (34) in the piston ensures that the pins (8) are not damaged in connection with flattening of the flaps (26) produced by the punching. The flat side (36) of the piston ensures that the bottom plate (18) is pressed flat.

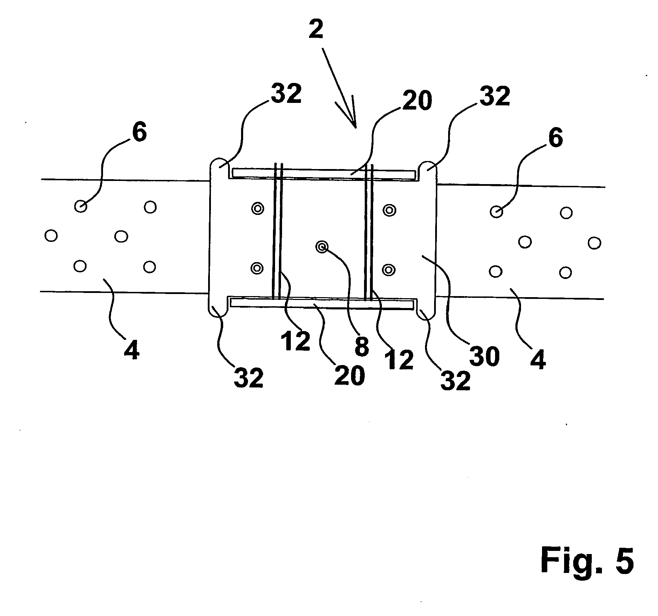

Fig. 5 shows a preferred embodiment of the invention with a perforated band fitting 2 in which is placed two perforated bands 4. These perforated bands are provided with holes 6, and the perforated band fitting 2 contains pins 8 fitting into the holes 6. The perforated bands 4 interact with the perforated band fitting 2 and is secured by means of locks 12. The perforated band fitting has sides which are seen from above with the designation 20. These sides have not shown holes for receiving the locks 12. A top plate 30 is disposed under the locks, where also the top plate is formed with holes for accommodating the pins 8. The top plate 30 is provided with projections 32, where the projections have a width greater than that of the perforated bands 4.

If a tensile force to be transmitted from one perforated band 4 to the other perforated band through the perforated band fitting 2 arises during use, then the top plate will ensure that the pins 8 are not deflected, as the pins are supported by the top plate 30. The top plate is relieved by means of the projections 32 engaging the sides 20, so that the top plate, as soon as it is loaded, will transmit the forces to the sides of the fitting 2.

The pins (8 and 10) should be designed so that there is the least possible clearance around the pins (8 and 10) after mounting. Conversely, there is to be space for small deviations (tolerance). According to a preferred embodiment, the present invention is thus peculiar by including pins (8 and 10), the extreme part (farthest from the bottom plate) of which being slightly narrower than the holes (6) in the perforated bands (4) or the perforated band fittings. Hereby it would be easier to pass the perforated bands (4) or the perforated band fittings down over the pins (8 and 10). The lower part of the pins (8 and 10) may advantageously have a size and a shape corresponding to the holes (6) in the perforated bands (4) or the perforated band fittings. In that way clearance around the pins (8 and 10) is avoided.

Locking of the fitting (2) with mounted perforated bands (4) or perforated band fitting is best effected by inserting locking elements through the holes in the side plates in direction perpendicularly to the longitudinal direction (14) of the pins and the longitudinal direction (16) of the perforated band. Therefore, it may be advantageous to dispose the holes (22 and 24) in pairs opposite each other in the side plates (20). At the same time, it is necessary to pass the locking elements (12) around the pins (8 or 10) of the fitting.

The locking elements (12) have to be difficult to remove after mounting, so that it is ensured that they do not "fall off".

By locking element (12) as used in the present description is meant any kind of locking element (12). Thus it does not need to be any special kind of locking element (12). E.g. there may be used a pin which is bent at both ends after inserting through the holes (22 or 24) of the fitting.

According to a preferred embodiment, the present invention is, as mentioned, peculiar in that after mounting in the fitting (2), the at least one locking element (12) is retained via mechanical interaction with the fitting (2). The locking element (12) thus contributes with the required stability and security for permanent fastening of perforated bands (4) and perforated band fittings. A mechanical interaction that ensures the required stability and security for locking action has to be permanent. This may e.g. be achieved by using a metal clamp (12) as shown on Fig. 1.

Even though it is preferred with a system for rapid joining of a perforated band (4) or perforated band fitting, which is peculiar in that after mounting in the fitting (2), the at least one locking element (12) is retained via mechanical interaction with the fitting (2), it is possible to use interactions of non-mechanical character. It is e.g. possible to use an electric locking system if operating with e.g. perforated bands (4) that are energised by an electric source of energy.

It is, as mentioned, possible to use a clamp (12) which in connection with mounting is deformed compared with its natural shape, whereby a force arises that urges the clamp (12) to return to its initial shape, hereby contributing to permanent securing. Such a clamp may advantageously be made of metal (e.g. galvanized steel) and equipped with a "tail" which subsequent to mounting is pressed past the level of the bottom plate in the longitudinal direction (14) of the pins (8 and 10) in direction against the free end of the pins (8 and 10). Hereby additional guarantee for expedient locking of the joined perforated bands (4) and perforated band fittings is achieved.

It is possible to use other embodiments where the locking element (12) is not passed through holes (22 or 24) in the side plates (20). E.g. there may be used a locking element (12) in the shape of a clamp. A clamp may be passed under the fitting (2) and over the upper perforated band (4) or perforated band fitting. Using a clamp will function best with a fitting (2) without any side plates (20).

## Claims

1. A system for rapid and simple joining of at least a first and a second perforated band (4) or joining of perforated bands (4) with perforated band fittings (2), including at least one fitting (2) and at least one locking mechanism (12), **characterised in that** the fitting (2) contains at least one bottom plate (18), which bottom plate (18) of the fitting (2) contains a number of pins (8, 10), which pins are disposed with the same spacing as the holes (6) in the applied perforated band(s) (4), or perforated band fitting(s) (7,9), where the perforated band(s) (4) or perforated band fitting(s) (7,9) are disposed in layers on the bottom plate (18), where holes (6) in the perforated band(s) (4) or perforated band fitting(s) (7, 9) interacts with the pins (8,10) of the bottom plate, where at least one locking element (12) is placed over the perforated band(s) (4) or perforated band fitting(s) (7, 9) in order to fix the perforated band(s) (4) or perforated band fitting(s) (7, 9) in relation to the bottom plate (18).

2. A system for rapid and simple joining of at least a first and a second perforated band (4) or joining of perforated bands (4) with perforated band fittings (2) according to claim 1, **characterised in that** one pin (8) is longer than the other pins (10) for forming a guide pin (8).

3. A system for rapid and simple joining of at least a first and a second perforated band (4) or joining of perforated bands (4) with perforated band fittings (2) according to claim 1 or 2, **characterised in that** the fittings (2) include a bottom plate (18) with pins (8, 10) and at least one side plate (20).

4. A system for rapid and simple joining of at least a first and a second perforated band (4) or joining of perforated bands (4) with perforated band fittings (2) according to claim 3, **characterised in that** the at least one locking mechanism includes at least one locking element (12) for inserting through holes (22 or 24) in the at least one side plate (20).

5. A system for rapid and simple joining of at least a first and a second perforated band (4) or joining of perforated bands (4) with perforated band fittings (2) according to claim 4, **characterised in that** the at least one side plate (20) contains holes (22 and 24) in at least a first and a second distance from the bottom plate (18).

6. A system for rapid and simple joining of at least a first and a second perforated band (4) or joining of perforated bands (4) with perforated band fittings (2) according to claim 4-5, **characterised in that** after mounting in the fitting, the at least one locking element (12) is secured via mechanical interaction with the fitting (2).

7. A system for rapid and simple joining of at least a first and a second perforated band (4) or joining of perforated bands (4) with perforated band fittings (2) according to one of claims 1-6, **characterised in that** the system contains at least one top plate (30) that contains holes interacting with at pins (8,10) which extends through underlying perforated bands (4), the top plate (30) being designed longer than the perforated band fittings (2), where the top plate (30) outside the perforated band fitting (2) has at least one projection (32) with a width which is larger than the width of the sides (20) of the perforated band fitting (7, 9).

8. A method for rapid and simple joining of at least a first and a second perforated band (4) or joining of perforated bands (4) with perforated band fittings (2), **characterised in that** the joining of perforated bands or perforated band fittings (7, 9) is provided via a fitting (2) at least consisting of a bottom plate (18), where the perforated bands (4) form a layer of at least two perforated bands (6) that interact with the bottom plate (18) which bottom plate (18) of the fitting (2) contains a number of pins (8,10) which pins (8,10) are disposed with the same spacing as the holes (6) in the applied perforated band(s) (4), or perforated band fitting(s) (7,9), which pins (8,10) are for inserting into the holes of the perforated bands (4) or perforated band fittings (7,9), and at least one locking element (12) for fixing perforated bands (4) or perforated band fittings (7,9) in the longitudinal direction of the pins (14).

9. Method according to claim 8, **characterised in that** the bottom plate interacts with at least one side face provided with holes (22,24) disposed at at least a first and a second distance from the bottom plate (18), where at least one locking element (12) is inserted through holes (22 or 24) in the at least one side plate (20) of the fitting (2).

10. Method according to claim 9, **characterised in that** after mounting in the fitting, the at least one locking element (12) is secured via mechanical interaction between the at least one locking element (12) and the fitting (2).

11. A method for making a fitting for joining at least a first and a second perforated band (4) or joining of perforated bands (4) with perforated band fittings (2), where the fitting includes a bottom plate (18) which bottom plate (18) of the fitting (2) contains a number of pins (8,10) which pins (8,10) are disposed with the same spacing as the holes (6) in the applied perforated band(s) (4), or perforated band fitting(s) (7,9), **characterised in that** holes are punched in the bottom plate (18) in which holes pins are inserted, after which the areas on the bottom plate around the pins is pressed flat while simultaneously holding the pins fixed.

## Patentansprüche

1. System zum schnellen und einfachen Verbinden wenigstens eines ersten und eines zweiten perforierten Bandes (4) oder zum Verbinden von perforierten Bändern (4) mit Formstücken (2) für perforierte Bänder, die wenigstens ein Formstück (2) und wenigstens einen Verriegelungsmechanismus (12) enthalten, **dadurch gekennzeichnet, dass** das Formstück (2) wenigstens eine Bodenplatte (18) enthält, die Bodenplatte (18) des Formstücks (2) mehrere Stifte (8, 10) enthält, die Stifte mit dem gleichen Abstand angeordnet sind wie die Löcher (6) in dem aufgelegten perforierten Band (4) (bzw. den Bändern) oder in dem Formstück (den Formstücken) (7, 9) für perforierte Bänder, wobei das perforierte Band (die Bänder) (4) oder das Formstück (die Formstücke) (7, 9) für perforierte Bänder in Schichten auf der Bodenplatte (18) angeordnet sind, wobei Löcher (6) in dem perforierten Band (den Bändern) (4) oder in dem Formstück (den Formstücken) (7, 9) für perforierte Bänder mit den Stiften (8, 10) der Bodenplatte zusammenwirken, wobei wenigstens ein Verriegelungselement (12) über dem perforierten Band (den Bändern) (4) oder dem Formstück (den Formstücken) (7, 9) für perforierte Bänder angebracht wird, um das perforierte Band (die Bänder) (4) oder das Formstück (die Formstücke) (7, 9) für perforierte Bänder in Bezug auf die Bodenplatte (18) zu fixieren.

2. System zum schnellen und einfachen Verbinden wenigstens eines ersten und eines zweiten perforierten Bandes (4) oder zum Verbinden von perforierten Bändern (4) mit Formstücken (2) für perforierte Bänder nach Anspruch 1, **dadurch gekennzeichnet, dass** ein Stift (8) länger ist als die anderen Stifte (10), um einen Führungsstift (8) zu bilden.

3. System zum schnellen und einfachen Verbinden wenigstens eines ersten und eines zweiten perforierten Bandes (4) oder zum Verbinden von perforierten Bändern (4) mit Formstücken (2) für perforierte Bänder nach Anspruch 1 oder 2, **dadurch gekennzeichnet, dass** die Formstücke (2) eine Bodenplatte (18) mit Stiften (8, 10) und wenigstens eine Seitenplatte (20) enthalten.

4. System zum schnellen und einfachen Verbinden wenigstens eines ersten und eines zweiten perforierten Bandes (4) oder zum Verbinden von perforierten Bändern (4) mit Formstücken (2) für perforierte Bänder nach Anspruch 3, **dadurch gekennzeichnet, dass** der wenigstens eine Verriegelungsmechanismus wenigstens ein Verriegelungselement (12) zum Einsetzen durch Löcher (22 oder 24) in der wenigstens einen Seitenplatte (20) enthält.

5. System zum schnellen und einfachen Verbinden wenigstens eines ersten und eines zweiten perforierten Bandes (4) oder zum Verbinden von perforierten Bändern (4) mit Formstücken (2) für perforierte Bänder nach Anspruch 4, **dadurch gekennzeichnet, dass** die wenigstens eine Seitenplatte (20) Löcher (22 und 24) in wenigstens einem ersten und einem zweiten Abstand von der Bodenplatte (18) enthält.

6. System zum schnellen und einfachen Verbinden wenigstens eines ersten und eines zweiten perforierten Bandes (4) oder zum Verbinden von perforierten Bändern (4) mit Formstücken (2) für perforierte Bänder nach Anspruch 4 bis 5, **dadurch gekennzeichnet, dass** das wenigstens eine Verriegelungselement (12) nach dem Anbringen in dem Formstück über eine mechanische Wechselwirkung mit dem Formstück (2) befestigt wird.

7. System zum schnellen und einfachen Verbinden wenigstens eines ersten und eines zweiten perforierten Bandes (4) oder zum Verbinden von perforierten Bändern (4) mit Formstücken (2) für perforierte Bänder nach einem der Ansprüche 1 bis 6, **dadurch gekennzeichnet, dass** das System wenigstens eine Kopfplatte (30) enthält, die Löcher aufweist, die mit Stiften (8, 10) zusammenwirken, die sich durch unterliegende perforierte Bänder (4) erstrecken, wobei die Kopfplatte (30) länger entworfen ist als die Formstücke (2) für perforierte Bänder, wobei die Kopfplatte (30) außerhalb des Formstücks (2) für perforierte Bänder wenigstens einen Vorsprung (32) mit einer Breite, die größer ist als die Breite der Seiten (20) des Formstücks (7, 9) für perforierte Bänder, aufweist.

8. Verfahren zum schnellen und einfachen Verbinden wenigstens eines ersten und eines zweiten perforierten Bandes (4) oder zum Verbinden von perforierten Bändern (4) mit Formstücken (2) für perforierte Bänder, **dadurch gekennzeichnet, dass** das Verbinden von perforierten Bändern oder Formstücken (7, 9) für perforierte Bänder über ein Formstück (2) erfolgt, das wenigstens eine Bodenplatte (18), wobei die perforierten Bänder (4) eine Schicht aus wenigstens zwei perforierten Bändern (6) bilden, die mit der Bodenplatte (18) zusammenwirkt, wobei die Bodenplatte (18) des Formstücks (2) mehrere Stifte (8, 10) enthält, wobei die Stifte (8, 10) mit dem gleichen Abstand wie die Löcher (6) in dem aufgelegten perforierten Band (den Bändern) (4) oder in dem Formstück (den Formstücken) (7, 9) für perforierte Bänder angeordnet sind, wobei die Stifte (8, 10) zum Einsetzen in die Löcher der perforierten Bänder (4) oder der Formstücke (7, 9) für perforierte Bänder vorgesehen sind, und wenigstens ein Verriegelungselement (12) zum Fixieren von perforierten Bändern (4) oder Formstücken (7, 9) für perforierte Bänder in der Längsrichtung der Stifte (14) enthält.

9. Verfahren nach Anspruch 8, **dadurch gekennzeichnet, dass** die Bodenplatte mit wenigstens einer Seitenfläche zusammenwirkt, die mit Löchern (22, 24) versehen ist, die in wenigstens einem ersten und einem zweiten Abstand von der Bodenplatte (18) angeordnet sind, wobei wenigstens ein Verriegelungselement (12) durch Löcher (22 oder 24) in der wenigstens einen Seitenplatte (20) des Formstücks (2) eingesetzt ist.

10. Verfahren nach Anspruch 9, **dadurch gekennzeichnet, dass** das wenigstens eine Verriegelungselement (12) nach dem Anbringen in dem Formstück über eine mechanische Wechselwirkung zwischen dem wenigstens einen Verriegelungselement (12) und dem Formstück (2) befestigt wird.

11. Verfahren zum Herstellen eines Formstücks zum Verbinden wenigstens eines ersten und eines zweiten perforierten Bandes (4) oder zum Verbinden von perforierten Bändern (4) mit Formstücken (2) für perforierte Bänder, wobei das Formstück eine Bodenplatte (18) enthält, die Bodenplatte (18) des Formstücks (2) mehrere Stifte (8, 10) enthält, die Stifte (8, 10) mit dem gleichen Abstand wie die Löcher (6) in dem aufgelegten perforierten Band (bzw. den Bändern) (4) oder in dem Formstück (den Formstücken) (7, 9) für perforierte Bänder angeordnet sind, **dadurch gekennzeichnet, dass** Löcher in die Bodenplatte (18) gestanzt sind, in die Stifte eingesetzt werden, woraufhin die Flächen auf der Bodenplatte um die Stifte flach gepresst werden, während die Stifte gleichzeitig im fixierten Zustand gehalten werden.

## Revendications

1. Système pour assemblage rapide et simple d'au moins une première et une deuxième bande perforée (4) ou assemblage de bandes perforées (4) avec des raccords de bandes perforées (2), comprenant au moins un raccord (2) et au moins un dispositif de verrouillage (12), **caractérisé en ce que** le raccord (2) comporte au moins une tôle de fond (18), ladite tôle de fond (18) du raccord (2) comporte un nombre de tenons (8, 10), lesdits tenons sont disposés avec le même espacement que les trous (6) dans la (les) bande(s) perforée(s) employée(s) (4) ou le (les) raccord(s) (7, 9) de bandes perforées, la (les) bande(s) perforée(s) (4) ou le (les) raccord(s) (7, 9) de bandes perforées étant disposé(es) en couches sur la tôle de fond (18) où des trous (6) dans la (les) bande(s) perforée(s) (4) ou le (les) raccord(s) (7, 9) de bandes perforées agissent ensemble avec les tenons (8, 10) de la tôle de fond, où au moins un dispositif de verrouillage (12) est arrangé au dessus de la (les) bande(s) perforée(s) (4) ou le (les) raccord(s) (7, 9) de bandes perforées pour fixer la (les) bande(s) perforée(s) (4) ou le (les) raccord(s) (7, 9) de bandes perforées par rapport à la tôle de fond (18).

2. Système pour assemblage rapide et simple d'au moins une première et une deuxième bande perforée (4) ou assemblage de bandes perforées (4) avec des raccords de bandes perforées (2) selon la revendication 1, **caractérisé en ce qu'**un tenon (8) est plus long que les autres tenons (10) pour former un tenon de guidage (8).

3. Système pour assemblage rapide et simple d'au moins une première et une deuxième bande perforée (4) ou assemblage de bandes perforées (4) avec des raccords de bandes perforées (2) selon la revendication 1 ou 2, **caractérisé en ce que** les raccords (2) comportent une tôle de fond (18) avec des tenons (8, 10) et au moins une plaque latérale (20).

4. Système pour assemblage rapide et simple d'au moins une première et une deuxième bande perforée (4) ou assemblage de bandes perforées avec des raccords de bandes perforées (2) selon la revendication 3, **caractérisé en ce que** ledit au moins un dispositif de verrouillage comporte au moins un élément de verrouillage (12) pour l'insertion à travers des trous (22 ou 24) dans la au moins une plaque latérale (20).

5. Système pour assemblage rapide et simple d'au moins une première et une deuxième bande perforée (4) ou assemblage de bandes perforées (4) avec des raccords de bandes perforées (2) selon la revendication 4, **caractérisé en ce que** la au moins une plaque latérale (20) contient des trous (22 et 24) à au moins une première et une deuxième distance de la tôle de fond (18).

6. Système pour assemblage rapide et simple d'au moins une première et une deuxième bande perforée (4) ou assemblage de bandes perforées (4) avec des raccords de bandes perforées (2) selon les revendications 4-5, **caractérisé en ce qu'**après le montage dans le raccord, le au moins un élément de verrouillage (12) est consolidé par la coopération mécanique du raccord (2).

7. Système pour assemblage rapide et simple d'au moins une première et une deuxième bande perforée (4) ou assemblage de bandes perforées (4) avec des raccords de bandes perforées (2) selon l'une des revendications 1-6, **caractérisé en ce que** le système comporte au moins une plaque de dessus (30) qui contient des trous coopérant avec les tenons (8, 10) qui s'étendent à travers les bandes perforées sous jacentes (4), la plaque de dessus (30) étant dessinée plus longue que les raccords de bandes perforées (2), où la plaque de dessus (30) en dehors du raccord de bandes perforées (2) comporte au moins une saillie (32) avec une largeur qui est plus grande que la largeur des côtés (20) du raccord de bandes perforées (7, 9).

8. Système pour assemblage rapide et simple d'au moins une première et une deuxième bande perforée (4) ou assemblage de bandes perforées (4) avec des raccords de bandes perforées (2), **caractérisé en ce que** l'assemblage de bandes perforées ou de raccords (7, 9) de bandes perforées est prévu par un raccord (2) comportant au moins une tôle de fond (18), où les bandes perforées (4) forment une couche d'au moins deux bandes perforées (6) qui agissent ensemble avec la tôle de fond (18), ladite tôle de fond (18) du raccord (2) comporte un nombre de tenons (8, 10) lesdits tenons (8, 10) sont disposés avec le même espacement que les trous (6) dans la (les) bande(s) perforée(s) employée(s) (4) ou raccord(s) (7, 9) de bandes perforées, lesdits tenons (8, 10) sont prévus pour l'insertion dans les trous des bandes perforées (4) ou raccords de bandes perforées (7, 9), et au moins un élément de verrouillage (12) pour fixer des bandes perforées (4) ou des raccords de bandes perforées (7, 9) dans la direction longitudinale des tenons (14).

9. Procédé selon la revendication 8, **caractérisé en ce que** la tôle de fond agit ensemble avec au moins une face latérale munie de trous (22, 24) disposés à au moins une première et une deuxième distance de la plaque de fond (18) où au moins un élément de verrouillage (12) est inséré à travers les trous (22 ou 24) dans la au moins une face latérale (20) du raccord (2).

10. Procédé selon la revendication 9, **caractérisé en ce que** après le montage dans le raccord le au moins un élément de verrouillage (12) est consolidé par la coopération mécanique entre le au moins un élément de verrouillage (12) et le raccord (2).

11. Procédé pour faire un raccord pour assemblage d'au moins une première et une deuxième bande perforée (4) ou l'assemblage de bandes perforées (4) avec des raccords de bandes perforées (2), où le raccord comporte une tôle de fond (18), ladite tôle de fond (18) du raccord (2) contient un nombre de tenons (8, 10), lesdits tenons (8, 10) sont disposés avec le même espacement que les trous (6) dans la (les) bande(s) perforée(s) employée(s) ou le (les) raccord(s) de bandes perforées (7, 9), **caractérisé en ce que** des trous sont découpés dans la tôle de fond (18) dans lesquels trous des tenons sont insérés, et ensuite les zones sur la tôle de fond autour des tenons sont aplatis lors du maintien simultané des tenons.
